# EUROPÄISCHE PATENTSCHRIFT

(11) **EP 2 327 644 B1**
(45) Veröffentlichungstag und Bekanntmachung des Hinweises auf die Patenterteilung: **01.02.2012**
(21) Anmeldenummer: 09177367.1
(22) Anmeldetag: 27.11.2009
(51) Int. Cl.: B65G 1/137

(54) **Kommissioniereinrichtung und Verfahren zum Kommissionieren**
Commissioning device and method
Dispositif et procédé de préparation de commandes

(43) Veröffentlichungstag der Anmeldung: 01.06.2011
(73) Patentinhaber: psb intralogistics GmbH, 66955 Pirmasens (DE)
(72) Erfinder: Linge, Niels, Dr., 66955 Pirmasens (DE); Lütz, Andreas, 66955 Pirmasens (DE); Schehl, Hans Gerhard, 66955 Pirmasens (DE); Welsch, Volker, 66955 Pirmasens (DE); Utzinger, Werner, 66955 Pirmasens (DE); Hickethier, Klaus, 66955 Pirmasens (DE); Müller, Martin, 66955 Pirmasens (DE)
(74) Vertreter: Viering, Jentschura & Partner

(56) Entgegenhaltungen:
- EP-A1- 2 098 464
- DE-A1- 10 340 143
- JP-A- 4 116 001

## Beschreibung

Die Erfindung betrifft eine Kommissioniereinrichtung und ein Verfahren zum Kommissionieren von Artikeln aus Quellbehältern in Zielbehälter.

Hierbei umfasst der Begriff "Behälter" jegliche Transporthilfs- und/oder Lagermittel, wie z.B. Kästen, Kartonschachteln, etc., und auch solche Mittel, die kein zur Aufnahme von Artikeln dienendes Hohlvolumen einschließenden, wie Paletten, Kleiderständer, etc. Als Artikel kommen jegliche Kommissionswaren, wie Textilien, Möbel(teile), Maschinenelemente wie Schrauben, Muttern, Federn, etc. in Betracht.

In der Regel befinden sich die zu kommissionierenden Artikel in Quellbehältern, auch Lagerbehälter genannt, in einem Artikellager, insbesondere einem Regallager, an welches eine Quellbehälter-Fördereinrichtung, wie ein Regalbediengerät mit zugeordnetem Bahnförderer, angeschlossen ist, von der die Quellbehälter zu einem Kommissionierbereich transportiert werden, in welchem sich eine Kommissionierperson aufhält (d.h., der Kommissionierbereich stellt einen Steh- oder Sitz-Arbeitsplatz dar), von welcher die Artikel aus den Quellbehältern manuell in Zielbehälter, auch Auftragsbehälter genannt, kommissioniert werden (= manuelles Einbringen von Artikeln aus Quellbehältern in Zielbehälter nach einem bestimmten Kommissionierplan). Der Kommissionierbereich soll klein dimensioniert sein, damit die Kommissionierperson keine langen Wege zwischen den Quell- und Zielbehältern hat.

Für heutige Hochleistungskommissioniersysteme sind in der Regel pro Kommissionierperson 1000 oder mehr Zugriffe auf Artikel pro Stunde (so genannte "Picks" pro Stunde) gewünscht, d.h. die Kommissioniereinrichtung muss es einer jeweiligen

Kommissionierperson (von einer Mehrzahl von Kommissionierpersonen) ermöglichen, 1000 oder mehr Artikel pro Stunde aus diversen Quellbehältern zu greifen und in diverse Zielbehälter zu kommissionieren.

Aus der EP 2 098 464 A1 ist eine Kommissioniereinrichtung bekannt, mit einem Kommissionierbereich zum Kommissionieren von Artikeln aus Quellbehältern in Zielbehälter durch eine sich im Kommissionierbereich befindende Kommissionierperson, mehreren benachbart zum Kommissionierbereich angeordneten Zielbehälter-Umlauffördervorrichtungen, von welchen jede jeweils derart eingerichtet ist, dass von ihr mehrere Zielbehälter entlang eines Zielbehälter-Förderkreises in einer Förderkreisebene umlaufend wiederholt der sich im Kommissionierbereich befindenden Kommissionierperson zuführt werden, bis der jeweilige Zielbehälter bis zu einem vorbestimmten Grad mit Artikeln aus einem oder mehreren Quellbehältern kommissioniert ist, wobei die Förderkreisebene des Zielbehälter-Förderkreises der jeweiligen Zielbehälter-Umlauffördervorrichtung vertikal verläuft sowie den Kommissionierbereich schneidet, einer Zielbehälter-Fördereinrichtung zum Zuführen und Abführen von Zielbehältern an die jeweilige/von der jeweiligen Zielbehälter-Umlauffördervorrichtung und einer Quellbehälter-Fördertechnik zum Fördern von Quellbehältern von einem Artikellager zum Kommissionierbereich und zum Zurückfördern von Quellbehältern von dem Kommissionierbereich zum Artikellager, wobei die Quellbehälter-Fördertechnik auch wenigstens eine benachbart zum Kommissionierbereich angeordnete Quellbehälter-Umlauffördervorrichtung aufweisen kann, welche derart eingerichtet ist, dass von ihr mehrere Quellbehälter entlang eines Quellbehälter-Förderkreises in einer Förderkreisebene umlaufend wiederholt der sich im Kommissionierbereich befindenden Kommissionierperson zuführt werden, bis aus dem jeweiligen Quellbehälter eine vorbestimmte Anzahl von Artikeln in die Zielbehälter kommissioniert sind, und eine Quellbehälter-Fördereinrichtung aufweisen kann zum Zuführen und Abführen von Quellbehältern an die wenigstens eine/von der wenigstens einen Quellbehälter-Umlauffördervorrichtung, wobei die Förderkreisebene des Quellbehälter-Förderkreises der jeweiligen Quellbehälter-Umlauffördervorrichtung vertikal verläuft sowie den Kommissionierbereich schneidet.

Durch die Erfindung wird eine Kommissioniereinrichtung sowie ein Verfahren zum Kommissionieren von Artikeln geschaffen, womit eine effiziente Kommissionierung mit 1000 und mehr Zugriffen pro Stunde pro Kommissionierperson ermöglicht wird und eine erhöhte Anzahl an Quellbehältern bedienbar ist, wobei die erfindungsgemäße Kommissioniereinrichtung platz- und kosteneffizient ist.

Hierzu stellt die Erfindung eine Kommissioniereinrichtung gemäß dem Anspruch 1 sowie ein Verfahren zum Kommissionieren gemäß dem Anspruch 9 bereit. Vorteilhafte Weiterbildungen der Erfindung sind in den abhängigen Ansprüchen beschrieben.

Die Zielbehälter-Transportbahn oder auch Zielbehälter-Förderbahn kann z.B. als Transportband, wie beispielsweise als Rollenband, oder aber auch in Form einer Wagenbahn ausgebildet sein, entlang welcher Rollwagen mit Zielbehälter gefahren werden. Die Zielbehälter und die Quellbehälter können z.B. baugleich ausgeführt sein und damit gegeneinander austauschbar sein. Der Quellbehälter-Förderkreis der jeweiligen Quellbehälter-Umlauffördervorrichtung kann zwei im Vertikalabstand voneinander angeordnete, z.B. parallele, Linearförderstrecken mit einem jeweiligen Antrieb zum automatischen Bewegen der Quellbehälter sowie an den Enden der Linearförderstrecken jeweils eine Hubeinrichtung aufweisen zum automatischen Umsetzen der Quellbehälter von der einen auf die jeweilige andere Linearförderstrecke, wobei der Antrieb der unteren Linearförderstrecke bevorzugt als Schwerkraftantrieb ausgebildet und der Antrieb der oberen Linearförderstrecke bevorzugt als Elektromotorantrieb ausgebildet ist. Ferner kann die jeweilige Quellbehälter-Umlauffördervorrichtung mehrere fest im Quellbehälter-Förderkreis vorgesehene und damit umlaufende Tragmittel, wie z.B. Tragplatten, zur Aufnahme der Quellbehälter aufweisen.

Dadurch, dass gemäß der Erfindung stets mehrere Quellbehälter umlaufend wiederholt der im Kommissionierbereich befindlichen Kommissionierperson zugeführt werden, ist es möglich, eine Vielzahl von unterschiedlichen Artikeln aus einer Vielzahl von Quellbehältern in die Zielbehälter hinein zu kommissionieren. Damit kann die Erfindung auch den großen Förderkapazitäten eines sogenannten Shuttle-Artikellagers (z.B. ausgebildet in Form eins Shuttle-Hochregallagers) gerecht werden, mit welchem ein enormer Umsatz (Einlagern und Auslagern von Quellbehältern in das Artikellager) möglich ist. Das Artikellager ist in der Regel entfernt von der Kommissioniereinrichtung angeordnet, wobei die Quellbehälter anhand einer Fördertechnik, z.B. über von Förderbändern (wie z.B. Rollenbändern) gebildete Förderbahnen, automatisch zwischen dem Artikellager und den Quellbehälter-Umlauffördervorrichtungen hin- und her gefördert werden.

Der Kommissionsvorgang ist sehr effizient (hohe Zugriffszahl (Pickzahl)), da im Rahmen des Umlaufs der Quellbehälter ständig kommissioniert werden kann. Es ist nach einer Ausgestaltung vorgesehen, dass die Kommissioniervorrichtung keine Zielbehälter-Umlauffördervorrichtungen aufweist, die entsprechend der Quellbehälter-Umlaufförderichtungen ausgebildet und angeordnet sind, sondern dass die Zielbehälter nur über die stirnseitig vor den Quellbehälter-Umlauffördervorrichtungen vorgesehene Zielbehälter-Transportbahn zum Kommissionieren an den/von dem Kommissionierbereich transportiert bzw. gefördert sind.

Die Zielbehälter-Transportbahn verläuft quer zu den Förderkreisebenen der Quellbehälter-Förderkreise sowie eng benachbart entlang und vor den dem Kommissionierbereich zugewandten Stirnseiten/Stirnenden der Quellbehälter-Umlauffördervorrichtungen. Der Kommissionierbereich erstreckt sich seinerseits unmittelbar vor und damit angrenzend an die Zielbehälter-Transportbahn. Damit können die Waren durch die sich im Kommissionierbereich befindliche Kommissionierperson von den dem Kommissionierbereich nächstgelegenen Quellbehältern, die in den Quellbehälter-Förderkreisen gefördert sind, entnommen und gleich in die davor auf der Zielbehälter-Transportbahn entlang dem Kommissionierbereich geförderten Zielbehälter hinein kommissioniert werden.

Wenn der sich auf der Zielbehälter-Transportbahn befindliche Zielbehälter mit der gewünschten Anzahl an Artikeln, z.B. mit allen letztlich in den Zielbehälter zu kommissionieren Artikeln, aus den diversen herangeführten Quellbehältern wunschgemäß kommissioniert ist, wird er auf der Zielbehälter-Transportbahn weitertransportiert, z.B. direkt zur Bestellperson, zu einer Weiterverteileinrichtung, zu einer Versandeinrichtung oder auch zu einer anderen Kommissioniereinrichtung, mittels welcher er weiterkommissioniert wird. Hierbei ist es z.B. möglich, einen niedrigeren Kommissionierungsgrad (im Vergleich zum fertig kommissionierten Behälter) für den jeweiligen sich auf der Zielbehälter-Transportbahn befindlichen Zielbehälter vorzubestimmen; so kann beispielsweise der jeweilige Zielbehälter nur mit Artikeln eines einzigen Typs oder einer definierten Anzahl von Typen aus einem oder mehreren diesem Artikeltyp zugeordneten Quellbehältern kommissioniert werden und dann über die Zielbehälter-Transportbahn einer anderen, entsprechend aufgebauten Kommissioniereinrichtung zugeführt werden, wo er dann von der dortigen Kommissionierperson mit einem anderen Artikel aus anderen Quellbehälter erfindungsgemäß weiter kommissioniert wird; diese Vorgehensweise kann bis zur letztlich kompletten Kommissionierung des jeweiligen Zielbehälters wiederholt werden.

Die Quellbehälter können Artikel eines Typs (= "sortenreine" Quellbehälter) oder aber auch mehrere Artikel unterschiedlichen Typs enthalten/tragen. So können z.B. Behälter Kleidungsstücke (=Artikel) unterschiedlicher Farbe (Typ) oder Kleidungsstücke (=Artikel) unterschiedlicher Art (Typ) wie Hose, Bluse, T-Shirt enthalten. Die Kommissionierperson erhält hierbei über eine Anzeige genaue Anweisung, welcher Artikel und/oder welcher Artikeltyp und/oder welche Menge dieses Artikeltyps in den jeweiligen Zielbehälter zu kommissionieren ist.

Als Kommissionierbereich ist jener Bereich zu verstehen, in welchem sich die Kommissionierperson zum Kommissionieren der Artikel aus den Quellbehältern in die Zielbehälter aufhält bzw. bewegt; d.h. der Kommissionierbereich bildet den Arbeitsbereich/Arbeitsplatz der Kommissionierperson. Der Kommissionierbereich ist in der Regel als horizontale Fläche ausgebildet, auf welcher die Kommissionierperson steht oder mittels einer Sitzgelegenheit sitzt. Indem sich die Förderkreisebene (imaginär) durch den Kommissionierbereich hindurch erstreckt, befindet sich der Kommissionierbereich also stirnseitig am Förderkreis bzw. an der Förderschleife, wobei die Quellbehälter im jeweiligen Förderkreis auf einem Zuführtrumm auf den Kommissionierbereich frontal zugefördert und auf einem Abführtrumm frontal vom Kommissionierbereich weggefördert werden.

Die leeren Zielbehälter werden von der Zielbehälter-Fördertechnik, z.B. von einer Leer-Zielbehälteraufnahmestelle aus, dem Kommissionierbereich bzw. der dortigen Zielbehälter-Transportbahn automatisch zugeführt und die kommissionierten Zielbehälter werden von der Fördertechnik wieder aus dem Kommissionierbereich automatisch abgeführt. Ggf. noch mit Artikeln teilweise gefüllte Quellbehälter werden via eine Quellbehälter-Zuführfördereinrichtung, welche zusammen mit den Quellbehälter-Umlauffördervorrichtungen der Kommissioniereinrichtung(en) eine Quellbehälter-Fördertechnik bildet, automatisch vom Kommissionierbereich wieder ins Artikellager zurücktransportiert; leere Quellbehälter können z.B. am Kommissionierbereich manuell aus dem Fördersystem entnommen und zu einer Quellbehälter-Sammelstelle gebracht werden oder können aber auch automatisch vom Kommissionierbereich abgeführt und z.B. zwischen dem Lager und dem Kommissionierbereich automatisch entnommen und zur Leerquellbehälter-Sammelstelle transportiert werden. Es besteht auch die Möglichkeit, leere Quellbehälter direkt als Zielbehälter weiter zu verwenden, z.B. durch Umsetzen des leeren Quellbehälters vom Quellbehälter-Förderkreis auf die Zielbehälter-Transportbahn.

Die jeweilige Quellbehälter-Umlauffördervorrichtung kann als Paternostervorrichtung ausgebildet sein, in welcher die Behälter an einem z.B. via Elektromotor angetriebenen Umlaufstrang, insbesondere einer Umlaufkette hängen. Ferner kann als Quellbehälter-Umlauffördervorrichtung z.B. ein Schiebemechanismus vorgesehen sein, mit zwei im Wesentlichen horizontalen, in einem Vertikalabstand übereinander liegenden im wesentlichen linearen Förderstrecken, von denen die eine ein Zuführtrumm und die andere ein Abführtrumm darstellt (bezüglich des Kommissionierbereichs zuführend bzw. abführend), wobei an den Enden der Linearförderstrecken jeweils eine Umsetzvorrichtung in Form einer Hubeinrichtung vorgesehen ist, um die Quellbehälter vom Abführtrumm auf das Zuführtrumm und/oder auch umgekehrt zu transportieren. Der Umlaufbetrieb kann in seiner Richtung umkehrbar sein; d.h. die obere Förderstrecke kann wahlweise Zuführtrumm und Abführtrumm sein; gleiches gilt damit auch für die untere Förderstrecke. Dies hat den Vorteil, dass in Abhängigkeit von der Entfernung eines sich im Quellbehälter-Förderkreis befindlichen Quellbehälters zum Kommissionierbereich, dieser Quellbehälter bei Anforderung (d.h. wenn gemäß einem Steuerprogramm vorgegeben wird, dass nunmehr wieder aus diesem Quellbehälter zu kommissionieren ist) entweder in der einen oder in der anderen Umlaufrichtung zum Kommissionierbereich gefördert wird; hierbei wird dann in jener Umlaufrichtung gefördert, die der kürzesten Entfernung entspricht, wodurch die Förderzeit weiter erheblich verkürzt und damit die Effizienz der Kommissioniereinrichtung weiter erheblich gesteigert werden kann.

Der Antrieb auf den im Wesentlichen horizontalen Förderstrecken kann via Elektromotorantrieb erfolgen; es ist auch ein jeweiliger Schwerkraftantrieb denkbar, wobei die Förderstrecken dann z.B. etwa 3-5° gegenüber der Horizontalen geneigt sind (solche kleineren Neigungen werden hier als immer noch im Wesentlichen horizontal verlaufend verstanden). Beide Förderstrecken können zu dem Kommissionsbereich hin abfallend leicht geneigt verlaufen, sodass die zur Behälterabfuhr genutzte Förderstrecke mit einem Zusatzantrieb zur Überwindung der Schwerkraft versehen sein muss. Es ist auch denkbar, die Quellbehälter auf der unteren Förderstrecke via Schwerkraft zuzuführen (z.B. via die um 3-5° geneigte Förderstrecke) und die Quellbehälter auf der oberen Förderstrecke manuell zurückzuschieben, wofür die obere Förderstrecke z.B. als ungeneigte horizontale Rollenbahn ausgebildet ist, bevorzugt ist jedoch ein automatischer Antrieb (inkl. Schwerkraftantrieb). An dem dem Kommissionierbereich zugewandten Stirnende der Förderstrecken kann die vertikale Überführung des Quellbehälters von der einen zu der anderen Förderstrecke manuell erfolgen, bevorzugt sind aber an beiden Stirnenden der Quellbehälter-Umlauffördervorrichtung elektromotorgetriebene Hubvorrichtungen zum Umsetzen der Quellbehälter von der einen auf die andere Förderstrecke, d.h. von dem einen auf das andere Trumm, vorgesehen.

Die obere Förderstrecke liegt z.B. auf Arbeitshöhe (ca. 1100mm über dem Boden) oder etwas darüber (1200-1300mm), so dass die Kommissionierperson auf jenen Quellbehälter von der Quellbehälter-Umlauffördervorrichtung leicht Zugriff hat, der an dem ihr zugewandten Ende der oberen Förderstrecke der Quellbehälter-Umlauffördervorrichtung positioniert ist. Die Zielbehälter-Transportbahn verläuft z.B. maximal auf Höhe der oberen Förderstrecke der jeweiligen Quellbehälter-Umlauffördervorrichtung oder darunter, damit in ergonomisch günstigerer Weise von weiter oben angeordneten Quellbehältern in demgegenüber weiter unten angeordnete Zielbehälter kommissioniert werden kann.

Bei einer Vielzahl von Quellbehältern, wie z.B. sechs oder mehr Quellbehältern, pro Förderkreis erstreckt sich die Quellbehälter-Umlauffördervorrichtung bevorzugt mit ihrer oberen Förderstrecke (z.B. Abführtrumm) und ihrer unteren Förderstrecke (z.B. Zuführtrumm) im Wesentlichen horizontal länglich, sodass die Quellbehälter im Wesentlichen horizontal zu der im Kommissionierbereich befindlichen Kommissionsperson hintransportiert und entsprechend wieder davon wegtransportiert werden.

Die Quellbehälter laufen daher in einem Quellbehälter-Förderkreis, d.h. einer Quellbehälter-Förderschleife, um, die eine Förderkreisebene definiert, die erfindungsgemäß durch den Kommissionierbereich verläuft. (D.h. die imaginäre Ebene, nicht aber der Förderkreis mit den Quellbehältern als Struktur erstreckt sich durch den Kommissionierbereich). Dies hat den Vorteil, dass die Quellbehälter-Umlauffördervorrichtung von der stirnseitig am zugehörigen Förderkreis, d.h. stirnseitig an der zugehörigen Förderschleife, positionierten Kommissionierperson aus gesehen sehr schmal, d.h. mit sehr geringer Breite bauen kann. Die Breite der Quellbehälter-Umlauffördervorrichtung wird hierbei bevorzugt an die Breite der Quellbehälter angepasst. So können z.B. 400-500 mm breite Quellbehälter mit einer in etwa entsprechend breiten Quellbehälter-Umlauffördervorrichtung transportiert werden.

Dies erlaubt es nunmehr, dass problemlos mehrere Quellbehälter-Umlauffördervorrichtung mit zueinander parallelen Förderkreisebenen nebeneinander in Reihe angeordnet werden, welche von derselben Kommissionierperson bedient werden können, da der Kommissionierbereich insgesamt sehr klein bleibt. Die Breite des Kommissionierbereichs entspricht der Gesamtbreite der nebeneinander angeordneten Zielbehälter-Umlauffördervorrichtungen. Es ist hierbei durchaus möglich, vier bis sechs oder auch mehr Quellbehälter-Umlauffördervorrichtungen parallel nebeneinander aneinandergereiht anzuordnen, die von einer Kommissionierperson bedient werden.

Nach einer Variante hat die Quellbehälter-Zuführfördereinrichtung eine Quellbehälter-Zuführtransportbahn, z.B. in Form eines Rollenbands, von welcher die Quellbehälter vom Artikellager zu der jeweiligen Quellbehälter-Umlauffördervorrichtung transportiert werden, um dort bei Anforderung mittels einer Überführungsvorrichtung an die jeweilige Quellbehälter-Umlauffördervorrichtung überführt zu werden. Ferner kann die Quellbehälter-Zuführfördereinrichtung eine Zielbehälter-Abführtransportbahn, z.B. in Form eines Rollenbands umfassen, auf welcher Quellbehälter mittels einer Überführungsvorrichtung von der Quellbehälter-Umlauffördervorrichtung überführt werden, um ins Artikellager zurücktransportiert zu werden. Die Quellbehälter-Zuführtransportbahn und die Quellbehälter-Abführtransportbahn können auch als eine einzige Transportbahn ausgebildet sein. Eine Sensoreinrichtung, z.B. eine Strichcode- oder RFID-Tag-Leseeinrichtung, erkennt beispielsweise, ob, wann, wo und wie ein Quellbehälter zuzuführen/abzuführen ist, um dann Weiterleitsysteme/Überführsysteme zur Durchführung der notwendigen Überführungsvorgänge entsprechend anzusteuern.

Die Quellbehälter-Zuführfördereinrichtung kann ein oder mehrere Lagerzugriffsgeräte aufweisen, z.B. ein Lagerbediengerät/Lagerbedienfahrzeug auf, um auf die im Artikellager gelagerten Quellbehälter zuzugreifen und um letztere dann den weiteren Transporteinrichtungen der Quellbehälter-Fördertechnik zum Zuführen an die Quellbehälter-Umlauffördereinrichtung zuzuführen.

Die jeweiligen als Module ausgebildeten Quellbehälter-Umlauffördervorrichtungen sind z.B. schubladenartig aneinander geführt angebracht, z.B. über ineinandergreifende Führungsschienen/Längsnuten mit Gleit- oder Rollenlagerung. Die Führungsachse verläuft z.B. im Wesentlich horizontal parallel zu den oberen und den unteren Förderstrecken. Es sind aber auch Steckverbindungen denkbar, wobei die jeweiligen Module in Richtung senkrecht zu den Förderkreisebenen aneinander steckend oder rastend befestigt werden. Das Schubladensystem hat hierbei den Vorteil, dass mittig angeordnete Module einfach via Herausziehen aus dem und wieder Einschieben in den Modulverbund auswechselbar sind.

Die jeweilige Quellbehälter-Umlauffördervorrichtung kann als im Wesentlichen horizontale Förderstrecken z.B. zwei Rollenbahnen oder zwei rollengestützte Transportbänder mit frei drehenden und/oder motorgetriebenen Rollen aufweisen, auf welche die Quellbehälter direkt aufgesetzt werden. Die Hubvorrichtungen können Greifarme sein, die die Quellbehälter am Stirnende des Förderkreises greifen und frei umsetzen; die Hubvorrichtungen können auch Hubplattformen sein, welche jeweils in Flucht zu der jeweiligen Förderstrecke bringbar sind, sodass die Förderstrecke die Behälter direkt auf die Plattform fördert. Es können auch Tragmittel fest in den Förderkreis integriert sein, wie z.B. Tragplatten, auf welche die Quellbehälter aufsetzbar sind. Die Tragplatten werden stets umlaufend transportiert, z.B. über Rollenbahnen in der im Wesentlichen Horizontalen, wobei sie am Ende des jeweiligen Trumms, d.h. der jeweiligen im Wesentlichen horizontalen Förderstrecke, dann auf eine Hubvorrichtung rollen oder geschoben werden, um zu der darunter oder darüber liegenden Förderstrecke gehoben/gesenkt zu werden, wo sie dann wieder von der Hubvorrichtung auf diese Förderstrecke geschoben werden.

Die Erfindung bezieht sich auch die Kombination einer wie in dieser Anmeldung beschriebenen Kommissioniereinrichtung mit einem Shuttle-Regallager, welches mehrere Regalgänge und mehrere Regalebenen sowie ein oder mehrere Shuttles pro Regalgang aufweist, die in einer beliebigen Regalebene entlang des zugehörigen Regalgangs geführt verfahrbar sind und auf denen Quellbehälter mit Artikeln zwischen den Regallagerplätzen des Shuttle-Regallagers und der Quellbehälter-Fördertechnik hin- und her transportierbar sind.

Die Erfindung wird im Folgenden anhand von Ausführungsbeispielen mit Bezugnahme auf die anhängende Zeichnung weiter erläutert. In der Zeichnung zeigen:
Figuren 1 und 2 perspektivische Schemadarstellungen von Kommissioniereinrichtungen gemäß Ausführungsformen der Erfindung,
Figuren 3 und 4 eine schematische Draufsicht bzw. eine schematische Seitenansicht der Kommissioniereinrichtung von Fig. 2 bzw. von Fig. 1,
Figuren 5, 6 und 7 jeweils eine schematische Seitenansicht eines Moduls einer Kommissioniereinrichtung gemäß Ausführungsformen der Erfindung,
Figuren 8 bis 11 schematische Draufsichten von weiteren Ausführungsformen der Erfindung.

In den Figuren sind für gleiche Elemente gleiche Bezugszeichen verwendet.

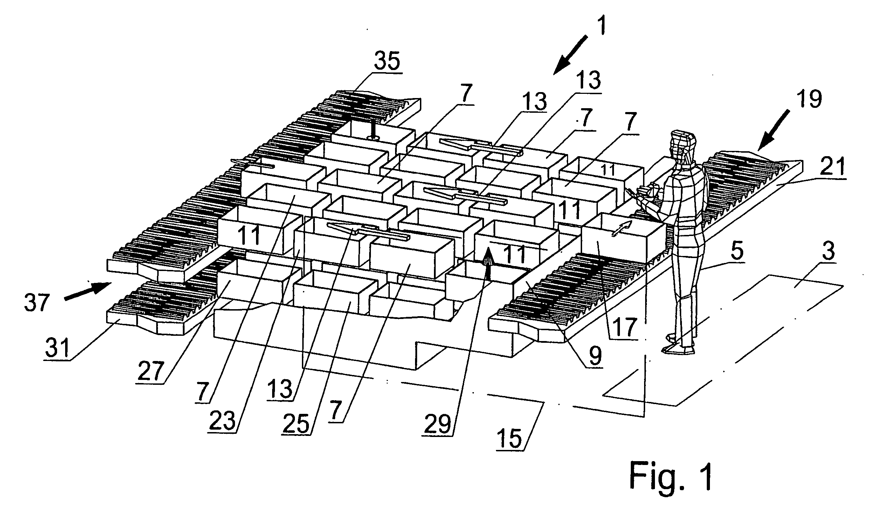

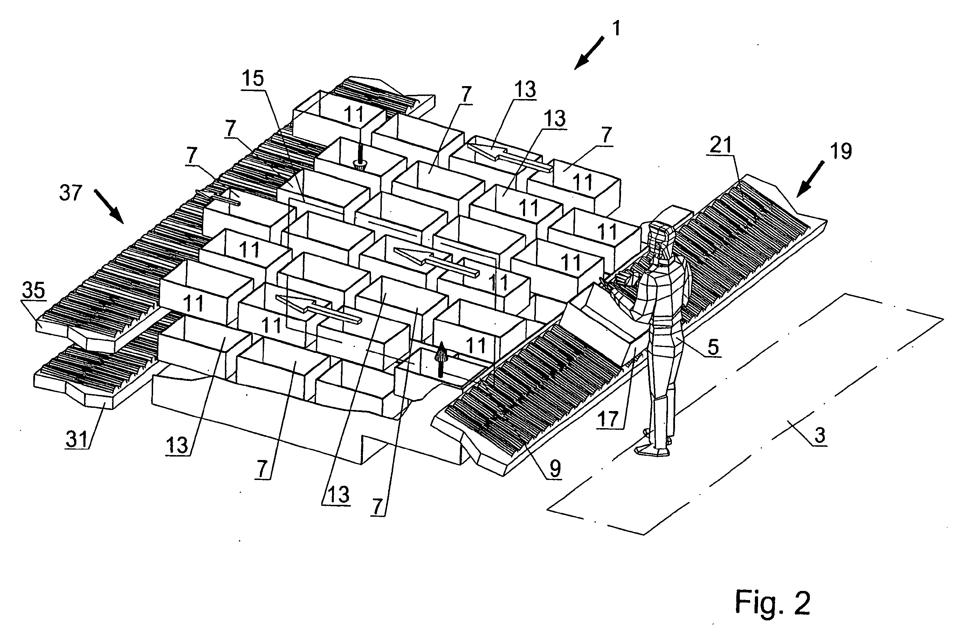

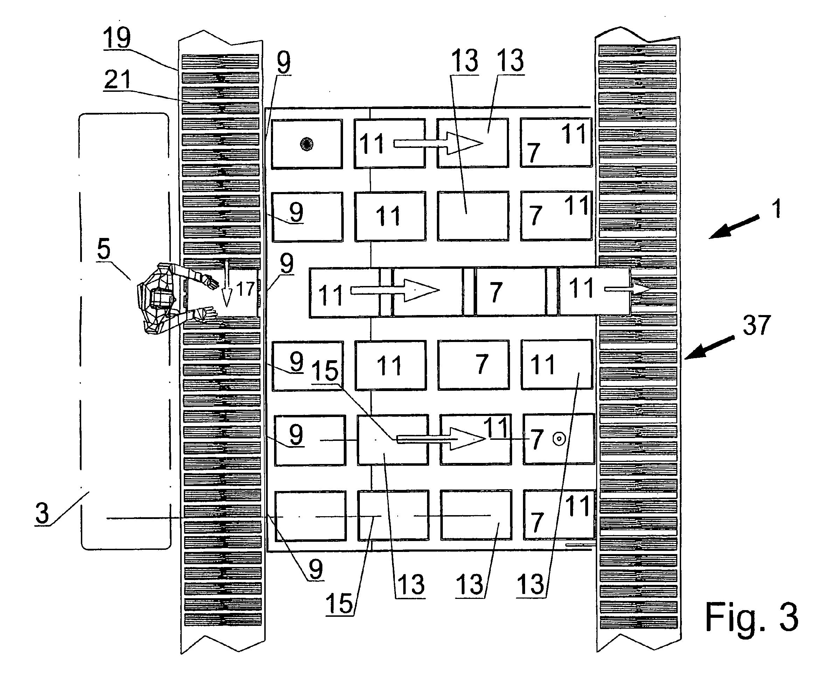

In Figuren 1 bis 4 ist eine erfindungsgemäße Kommissioniereinrichtung 1 dargestellt, mit einem als horizontale längliche Standfläche ausgebildeten Kommissionierbereich 3, in welchem sich eine Kommissionierperson 5 befindet, und mit fünf (Fig. 1) bzw. sechs (Figuren 1 und 2) parallel zueinander angeordneten Quellbehälter-Umlauffördervorrichtungen 7, welche mit ihrer einen Stirnseite 9 zum Kommissionierbereich 3 benachbart angeordnet sind und in denen jeweils mehrere kastenförmige Quellbehälter 11 in einem Förderkreis, d.h. einer Förderschleife, 13 vertikal umlaufend vorgesehen sind. Der jeweilige Förderkreis 13 verläuft in einer jeweiligen vertikalen Förderkreisebene 15. Die vertikalen Förderkreisebenen 13 der Quellbehälter-Umlauffördervorrichtungen 7 verlaufen parallel zueinander.

Die in den Quellbehältern 11 vorliegenden Artikel (nicht gezeigt), werden von der Kommissionierperson nach einem angezeigten Kommissionierplan in die Zielbehälter 17 kommissioniert, die über eine zu einer Zielbehälter-Fördertechnik 19 gehörende Zielbehälter-Transportbahn 21 der sich im Kommissionierbereich 3 befindlichen Kommissionierperson 5 automatisch zugeführt und von dieser wieder abgeführt werden. Die Zielbehälter-Transportbahn 21 verläuft an der dem Kommissionierbereich 3 zugewandten Stirnseite 9 der Quellbehälter-Umlauffördervorrichtungen 7 vor denselben entlang dem Kommissionierbereich 3. Hierbei ist Zielbehälter-Transportbahn 21 auf einer solchen Höhe angeordnet, dass die darauf entlang dem Kommissionierbereich 3 transportierten Zielbehälter 17 in etwa auf gleicher Höhe angeordnet sind, wie jene Quellbehälter 11 in den Quellbehälter-Umlauffördervorrichtungen 7, auf die die Kommissionierperson 5 zum Herausnehmen von zu kommissionierenden Artikeln zugreifen kann (hier sind das die an der einen Stirnseite 9 oben auf dem Förderkreis 13 angeordneten Quellbehälter 11). Bei der in Figur 2 gezeigten Ausführungsform ist die Zielbehälter-Transportbahn 21 in ihrer Querrichtung dem Kommissionierbereich 3 zugeneigt angeordnet, damit die Kommissionierperson einen leichteren Zugriff auf die Zielbehälter 17 hat.

Die Zielbehälter-Fördertechnik 19 kann ferner, neben der Zielbehälter-Transportbahn 21, auch eine Zielbehälter-Fördereinrichtung (nicht dargestellt) umfassen, von welcher der Zielbehälter-Transportbahn 21 leere Zielbehälter 17 zugeführt werden und welche die kommissionierten Zielbehälter 17 wieder von der Zielbehälter-Transportbahn 21 entnimmt und, z.B. zur Auslieferung, weitertransportiert. Die Zielbehälter-Fördereinrichtung kann hierzu übliche Transport- und Umsetzeinheiten, wie Greifer usw. aufweisen. Die Zielbehälter-Transportbahn 21 kann auch integraler Bestandteil (z.B. in Form eines Transportbahnzweigs) der Zielbehälter-Fördereinrichtung sein.

Die jeweiligen Quellbehälter-Umlauffördervorrichtungen 7 sind jeweils zueinander baugleich, mit identischen Behältern 11, die auch zu den Zielbehältern 17 identisch sein können, sodass die Quellbehälter 11 auch als Zielbehälter 17 verwendbar sind und umgekehrt.

Der Kommissionierbereich 3 erstreckt sich stirnseitig benachbart vor den Quellbehälter-Umlauffördervorrichtungen 7 und angrenzend oder unmittelbar benachbart vor der Zielbehälter-Transportbahn 21 mit einer der Gesamtbreite der Behälter-Umlauffördervorrichtungen 7 entsprechenden Länge. Die jeweilige Förderkreisebene 13 schneidet den Kommissionierbereich 3, sodass der Kommissionierbereich 3, die sich darin befindende Kommissionierperson 5 und die Zielbehälter-Transportbahn 21 an dem einen Stirnende 9 des jeweiligen Förderkreises 16 positioniert sind, wo sich auch die eine (Vertikal-)Umlenkstelle 29 jeder der Quellbehälter-Umlauffördervorrichtungen 7 befindet. Der jeweilige Zielbehälter 15 und der jeweilige Quellbehälter 21 haben z.B. die Abmessungen von 600mm x 400mm x 220mm (Länge x Breite x Höhe); die Breite der jeweiligen Quellbehälter-Umlauffördervorrichtung 7 liegt hier z.B. bei 500 mm, so dass die Gesamtbreite der Quellbehälter-Umlauffördervorrichtungen 7 und damit die Länge des Kommissionsbereichs 3 hier ca. 2500 mm beträgt.

Indem die Quellbehälter-Umlauffördervorrichtungen 7 baugleich sind, bilden sie leicht gegeneinander austauschbare Module; es können auch einfach weitere dieser Module hinzugefügt oder entfernt werden. Die Module sind baukastenartig aneinander gefügt, bevorzugt über Längsführungen die im Wesentlichen horizontal und parallel zu der Hinförder- und der Abförderrichtung (siehe unten) der Quellbehälter-Umlauffördervorrichtungen 7 verlaufen.

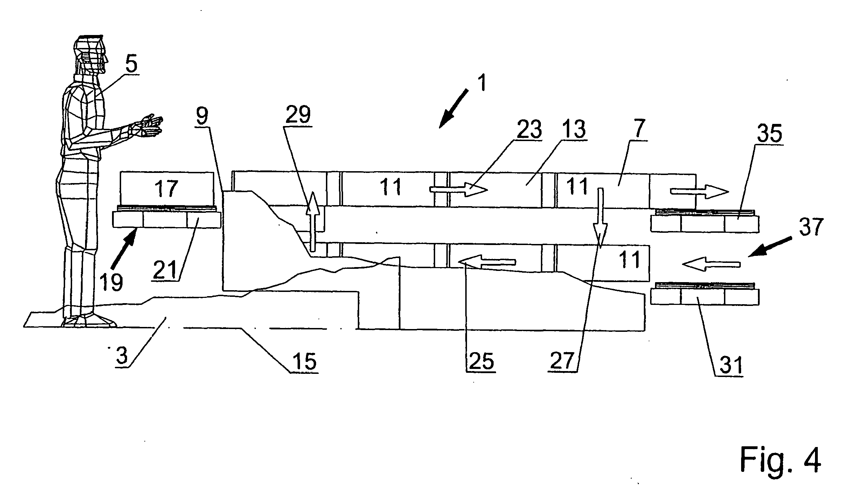

Im Folgenden wird stellvertretend für alle Module nur die Quellbehälter-Umlauffördervorrichtung 7 in Figur 1 ganz links weiter im Detail beschrieben (siehe auch Fig. 4).

Die Quellbehälter-Umlauffördervorrichtung 7 hat eine obere im Wesentlichen horizontal und im Wesentlichen linear verlaufende Förderstrecke 23, welche hier als Abführtrumm ausgebildet ist, auf welchem Quellbehälter 11 vom Kommissionsbereich 3 weggeführt werden; die obere Förderstrecke 23 verläuft auf einer solchen Höhe, dass die darauf geförderten Quellbehälter 11 in einer Arbeitshöhe von ca. 1100 mm liegen. Aus jenem Quellbehälter 11 auf der oberen Förderstrecke 23, der dem Kommissionierbereich 3 am nächsten gelegen ist, können von der Kommissionierperson 5 momentan in den Zielbehälter 17 zu kommissionierende Artikel entnommen werden. Die Quellbehälter-Umlauffördervorrichtung 7 hat ferner eine untere im Wesentlichen horizontal und im Wesentlichen linear verlaufende Förderstrecke 25, welche hier als Zuführtrumm ausgebildet ist, auf welchem die Quellbehälter 11 vertikal unter dem Abführtrumm zum Kommissionsbereich 3 hin gefördert werden.

Damit werden die Quellbehälter 11 in der unteren Förderstrecke 25 im Wesentlichen horizontal auf den Kommissionsbereich 3 bzw. die Kommissionsperson 5 zu gefördert und in der oberen Förderstrecke 23 im Wesentlichen horizontal vom Kommissionsbereich 3 bzw. von der Kommissionsperson 5 weg gefördert. Es kann alternativ auch auf der oberen Förderstrecke 23 zum Kommissionsbereich 3 hingefördert und auf der unteren Förderstrecke 25 vom Kommissionsbereich 3 weggefördert werden; es kann auch ein Umkehrbetrieb erfolgen. Eine erste, vom Kommissionierbereich 3 abgewandte Umkehrstelle 27 im Förderkreis der Quellbehälter-Umlauffördervorrichtung 7 ist mit einer nicht dargestellten Hubvorrichtung ausgestattet, von welcher Quellbehälter 11 zur Aufrechterhaltung des Umlaufbetriebs von der oberen Förderstrecke 23 (Abführtrumm) auf die untere Förderstrecke 25.(Zuführtrumm) automatisch, z.B. elektromotorgetrieben, umsetzbar sind. Die zweite, dem Kommissionierbereich 3 zugewandte Umkehrstelle 29 im Förderkreis 13 der Quellbehälter-Umlauffördervorrichtung 7 ist ebenfalls mit einer nicht dargestellten Hubvorrichtung ausgestattet, z.B. baugleich mit der erstgenannten Hubvorrichtung, um die Quellbehälter 11 zur Aufrechterhaltung des Umlaufbetriebs von der unteren Förderstrecke 25 (Zuführtrumm) auf die obere Förderstrecke 25 (Abführtrumm) automatisch, z.B. elektromotorgetrieben, umzusetzen. Prinzipiell könnte am der Kommissionierperson 5 zugewandten Stirnende 9 die Hubvorrichtung auch wegfallen und der Behälter manuell vom Zuführtrumm auf das Abführtrumm umgesetzt werden; dies ist jedoch wegen mangelnder Effizienz nicht bevorzugt. Die Quellbehälter 11 können auf der oberen und auf der unteren Förderstrecke 23, 25 jeweils elektromotorgetrieben sein; der gesamte Umlauf-Förderbetrieb kann auch in der Richtung umkehrbar sein.

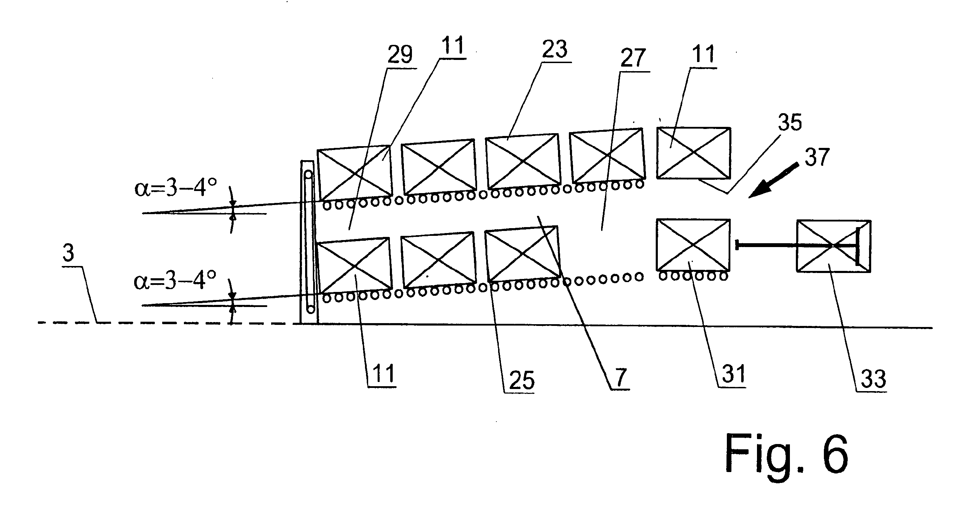

Figur 6 zeigt eine Ausführungsform einer Quellbehälter-Umlauffördervorrichtung 7, bei der die untere und die obere Umlaufstrecke 23, 25 zwischen der ersten und der zweiten Umkehrstelle 27, 29 in einem bestimmten Winkel, z.B. von 3°-4° oder 5°, zum Kommissionierbereich 3 hin geneigt verlaufen; (dies wird hier als immer noch im Wesentlichen horizontal verlaufend angesehen). Die Neigung führt dazu, dass in der unteren Umlaufstrecke 25 ein Schwerkraftantrieb in Richtung Kommissionierbereich 3 vorliegt, sodass ein Motorantrieb entfallen kann. In der oberen Umlaufstrecke 23 muss dagegen ein die Schwerkraft überwindender Antrieb vorliegen, um die Quellbehälter 11 vom Kommissionsbereich 3 abzuführen; dieser Antrieb kann durch Muskelkraft erfolgen, d.h. die Kommissionierperson schiebt die aneinandergrenzenden Zielbehälter 15 entlang z.B. der als eine Rollentransportbahn ausgebildeten oberen Förderstrecke 23 zurück. Bevorzugt ist die obere Förderstrecke 23 jedoch mit einem Motorantrieb, insbesondere einem Elektromotorantrieb, ausgestattet, um die Quellbehälter 11 vom Kommissionierbereich 3 abzuführen. Möglich ist auch, die obere Förderstrecke 23 in einem bestimmten Winkel, z.B. von 3°-4° oder 5°, vom Kommissionsbereich 3 weggeneigt vorzusehen, sodass die Quellbehälter 11 auch schwerkraftgetrieben wieder vom Kommissionsbereich 3 abgeführt werden.

Die Zuführung von Quellbehältern 11 von einem entfernt liegenden, nicht dargestellten Artikellager an die jeweilige Quellbehälter-Umlauffördervorrichtung 11 erfolgt gemäß den Ausführungsformen von Figuren 1 bis 6 über eine untere Rollentransportbahn 31, die auf Höhe der unteren Förderstrecke 25 der jeweiligen Quellbehälter-Umlauffördervorrichtung 7 sowie benachbart zu deren vom Kommissionsbereich 3 entfernten Umlenkstelle 27 an deren Stirnseite verläuft. Damit kann z.B. über eine Schiebeeinrichtung 33, wie z.B. einen druckbetätigten, z.B. hydraulischen oder pneumatischen, Schiebezylinder, ein Quellbehälter 11 von der unteren Rollentransportbahn 31 unmittelbar auf die Quellbehälter-Umlauffördervorrichtung 7 überführt, d.h. auf deren untere Förderstrecke 23 geschoben, werden. Die Abführung von komplett oder teilweise kommissionierten Quellbehältern 15 von der jeweiligen Zielbehälter-Umlauffördervorrichtung 7 zurück ins Artikellager erfolgt mittels einer oberen Rollentransportbahn 35, die parallel zu der unteren Rollentransportbahn 31 in einem Vertikalabstand dazu verläuft. Die Umsetzung des jeweiligen Quellbehälters 11 von der oberen Förderstrecke 25 auf die obere Rollentransportbahn 35 erfolgt z.B. einfach durch den Antrieb der oberen Förderstrecke 25; hierbei kann bei einem Schwerkraftantrieb ein mechanischer Stopper vorgesehen sein, der verhindert, dass der Quellbehälter 11 ungewollt vom Quellbehälter-Förderkreis 16 auf die obere Rollentransportbahn 35 gelangt. Nach den Ausführungsformen von Figuren 1 bis 6 bilden die obere und die untere Transportbahn 31 und 35 eine Quellbehälter-Zuführfördereinrichtung 37 zum Zuführen und Abführen von Zielbehältern 15 von/zurück zu dem Artikellager an die jeweilige/von der jeweiligen Quellbehälter-Umlauffördervorrichtung 7; die Quellbehälter-Zuführfördereinrichtung 37, d.h. deren Transportbahnen 31, 35, erstrecken sich quer zu den Förderkreisebenen 13. Die Quellbehälter-Zuführfördereinrichtung 37 und die Quellbehälter-Umlauffördervorrichtungen 7 bilden zusammen eine Quellbehälter-Fördertechnik zum automatischen Hin-und-Her-Transportieren von Quellbehältern 11 und damit von Artikeln zwischen dem Artikellager und dem Kommissionierbereich 3.

Die Transportrollenbahnen 31, 35 der Quellbehälter-Fördereinrichtung 37 können, wie auch die Zielbehälter-Transportbahn 45, in Form von Transportbändern, aber auch in Form von Transportwagen, die einer Bahn entlang geführt sind, realisiert sein. Der jeweiligen Kommissioniereinrichtung 1 kann auch direkt ein Artikellagerbediengerät zugeordnet sein, welches direkt jeweilige Quellbehälter vom Lager greift und in die Quellbehälter-Umlauffördervorrichtung 7 setzt und wieder aus dieser entnimmt. Gleiches kann auch für die Zielbehälter-Transportbahn 45 bezüglich eines Leer-Zielbehälter-Lagers und eines Lagers oder einer Abfertigungsstelle für fertig kommissionierte Zielbehälter vorgesehen sein; d.h. leere Zielbehälter 17 könnten auch mittels eines Greifarms von einem Leer-Zielbehälter-Lager entnommen und vom Greifarm direkt stirnseitig vor die Quellbehälter-Umlauffördereinrichtungen 7 zum Kommissionieren und von dort aus dann mittels eines Greifers z.B. weiter zu einer Versand-Fördertechnik transportiert werden. Der Bewegungsweg des Greifers bildet in diesem Falle quasi die Transportbahn für den Zielbehälter 17.

Der Betrieb der Kommissionseinrichtung 1 kann z.B. wie folgt sein: mittels der Quellbehälter-Fördereinrichtung 37 werden der jeweiligen Quellbehälter-Umlauffördervorrichtung 7 solange Quellbehälter 11 zugeführt, bis die jeweilige Quellbehälter-Umlauffördervorrichtung 7 jeweils komplett mit (in Fig. 1 mit sieben) mit Quellbehältern 11 bestückt ist. Es ist aber nicht notwendig, die Quellbehälter-Umlauffördervorrichtung 7 komplett zu bestücken. Mit dem Kommissionieren kann auch bereits begonnen werden, wenn der erste Quellbehälter 11 "Vorne, Oben" steht; d.h. dem Kommissionierbereich 3 zugewandt und der Kommissionierperson 5 zugänglich ist. Hierbei kann z.B. über eine Sensoreinrichtung erfasst sein, wie viele Artikel in einem jeweiligen Quellbehälter 11 zur Verfügung stehen; sollte die Anzahl an zur Verfügung stehenden Artikeln kleiner sein, als die Anzahl an Artikeln, die in den oder in die Gruppe von momentan zu kommissionierenden Zielbehältern 17 zu kommissionieren sind, dann können z.B. gleich nacheinander mehrere Quellbehälter dieses Artikeltyps in die jeweilige Quellbehälter-Umlauffördervorrichtung 7 eingebracht werden.

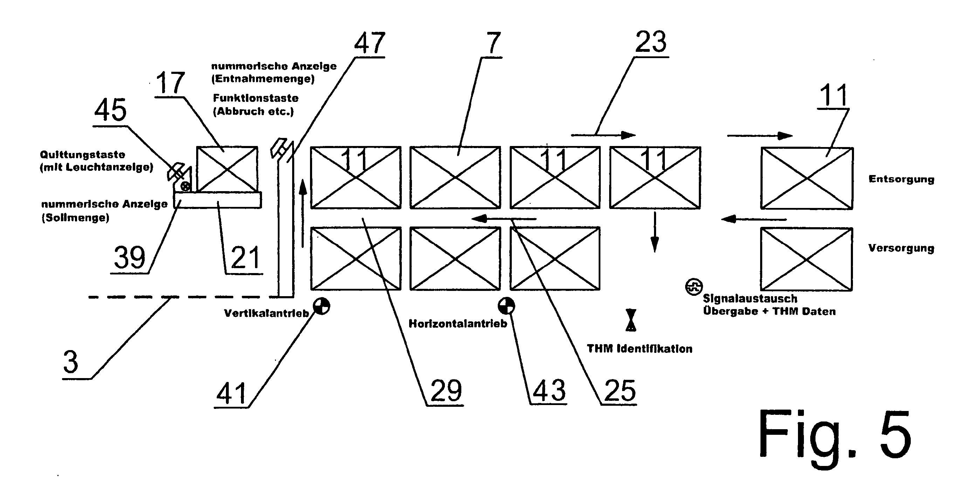

Die Kommissionierperson 3 kommissioniert dann nach einem gewünschten Kommissionierplan, welcher ihr von einer Anzeige (siehe z.B. 39 in Fig. 5) angezeigt wird, Artikel von den in den Quellbehälter-Umlaufvorrichtungen 7 umlaufenden Quellbehältern 11 in die Zielbehälter 17, die ihr auf der Zielbehälter-Transportbahn 21 zugeführt werden.

Figur 5 zeigt schematisch eine als Modul vorgesehene Quellbehälter-Umlauffördervorrichtung 7 einer Kommissioniereinrichtung 1 gemäß einer Ausführungsform der Erfindung. Die Ausführungsform der Quellbehälter-Umlauffördervorrichtung 7 ist ähnlich zu der in den Figuren 1 und 4 gezeigten. In der Fig. 5 steht das Kürzel "THM" für "Transporthilfsmittel" und bezeichnet damit Quellbehälter 11. In Figur 5 sind ferner verschiedene Antriebe für den Umlaufbetrieb dargestellt; so ist an der dem Kommissionierbereich 3 zugewandten Umlenkstelle 29 ein elektrischer Vertikalmotorantrieb 41 und in der unteren Förderstrecke 25 ein elektrischer Horizontalmotorantrieb 43 vorgesehen. Ferner sind diverse Sensoren zur Überwachung der Belegung und des sonstigen Betriebs der Quellbehälter-Umlauffördervorrichtung 7 angebracht. Ein Bedienpaneel 45 ist stirnseitig benachbart zu der Umlenkstelle 29 dem Kommissionierbereich 3 zugewandt angeordnet, und zwar unmittelbar benachbart vor der Zielbehälter-Transportbahn 21, welches Funktionstasten zur Betätigung der Kommissioniereinrichtung 3, inkl. z.B. Notaus-Taste, sowie die Anzeige 39 umfasst. Zwischen der Zielbehälter-Transportbahn 21 und den Quellbehälter-Umlauffördervorrichtungen 7 ist ein weiteres Bedienpaneel 47 angeordnet, an dem ebenfalls Funktionstasten zur weiteren Betätigung der Kommissioniereinrichtung 1 angeordnet sind.

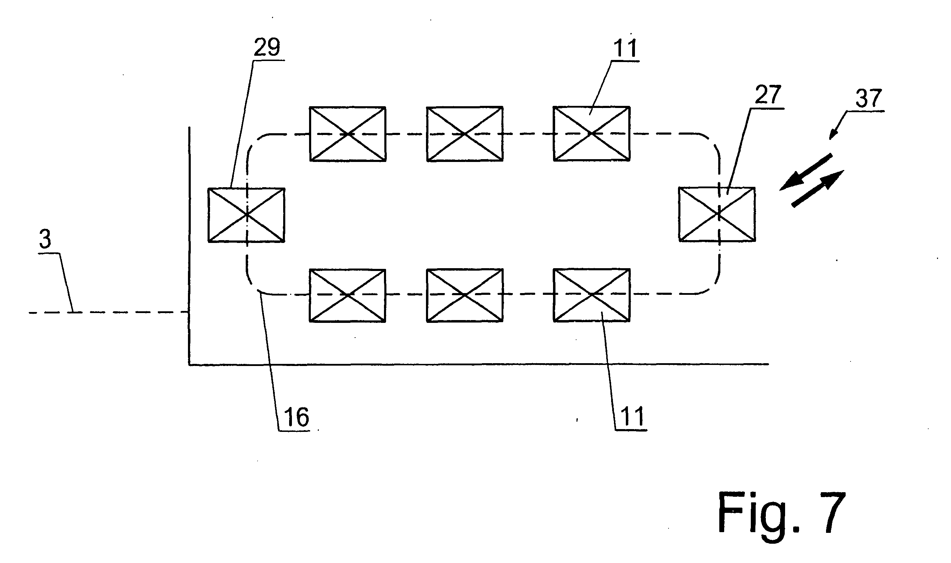

Figur 7 zeigt schematisch noch ein zum Schiebe-/Hubprinzip gemäß den Figuren 1-6 alternatives Umlaufprinzip für die Quellbehälter 11. Und zwar werden die Quellbehälter 11 hiernach nach dem Paternosterprinzip eingehängt in einen umlaufenden Strang transportiert, wodurch nur eine Antriebsvorrichtung zum Antreiben des Strangs erforderlich ist und Hubeinrichtungen entfallen. Der in der Figur 7 an der linken Umlenkstellen 29 vorliegende Quellbehälter 11 steht einer sich stirnseitig vom Förderkreis 13 im Kommissionierbereich 3 stehenden Kommissionierperson zum Kommissionieren zur Verfügung; die Quellbehälter 11 können an der in Figur rechten Umlenkstelle 27 über einen Mechanismus 37 in den Paternoster eingesetzt und daraus wieder entnommen werden.

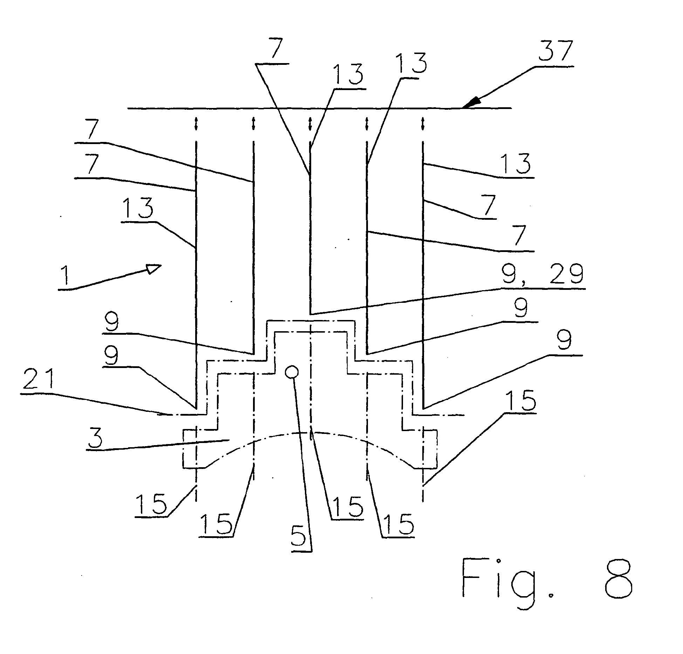

Die in den Figuren 1 bis 4 dargestellten Ausführungsformen der erfindungsgemäßen Kommissioniereinrichtung 1 zeigen alle deren Quellbehälter-Umlauffördervorrichtungen 7 als an der dem Kommissionierbereich 3 zugewandte Stirnseite 9 in Richtung senkrecht zu den Förderkreisebenen 7 zueinander fluchtend angeordnet. Diesbezüglich zeigen die Figuren 8-11 alternative Ausführungsformen der Erfindung.

So erstrecken sich bei der Kommissioniereinrichtung 1 gemäß der Ausführungsform von Figur 8 fünf Quellbehälter-Umlauffördervorrichtungen 7 mit ihren Förderkreisebenen 15 zwar parallel zueinander, jedoch sind die dem Kommissionierbereich 3 zugewandten Stirnenden 9 der jeweiligen Förderkreise 13 von oben her gesehen zueinander derart versetzt angeordnet, dass sie eine dem Kommissionierbereich 3 zugewandte, umgedrehte V-Form bilden. Bei dieser Ausführungsform hat demnach eine Kommissionierperson 5 horizontal stirnseitigen Zugriff auf den stirnseitig auf der mittig angeordneten Quellbehälter-Umlauffördervorrichtung 7 positionierten Quellbehälter 11 und hat ferner sowohl horizontal stirnseitigen und als auch horizontal seitlichen Zugriff auf die stirnseitig auf den seitlich der zentralen Quellbehälter-Umlauffördervorrichtung 7 angeordneten Quellbehälter-Umlauffördervorrichtungen 7. Die Zielbehälter-Transportbahn 21 läuft bei dieser Ausführungsform stufenartig entlang der dem Kommissionierbereich 3 zugewandten Stirnenden 9 der Quellbehälter-Umlauffördervorrichtungen 7.

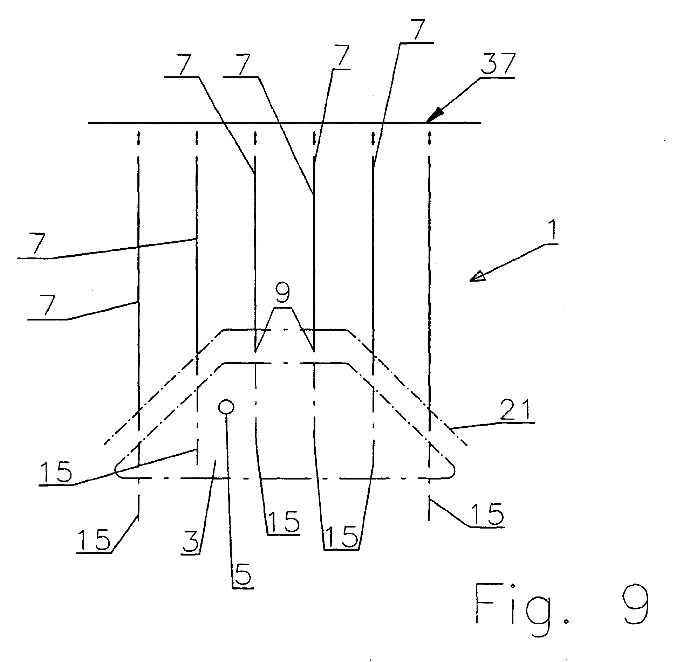

Bei der in Figur 9 gezeigten Ausführungsform einer Kommissioniereinrichtung 1 handelt es sich um eine Alternative zu der in Figur 8 gezeigten Ausführungsform mit mittig zwei Quellbehälter-Umlauffördervorrichtungen 7, die an ihrem dem Kommissionierbereich zugewandten Stirnende 9 zueinander bündig angeordnet sind, und mit jeweils zwei seitlich Quellbehälter-Umlauffördervorrichtungen 7, die abgestuft weiter vorragen, sodass in der Draufsicht eine erweiterte V-Form oder eine Wannenform ausgebildet ist. Die Zielbehälter-Transportbahn 21 verläuft in dieser Ausführungsform in der Draufsicht entsprechend Wannenförmig vor den dem Kommissionierbereich 3 zugewandten Stirnenden 9 der Quellbehälter-Umlauffördervorrichtungen 7. Die beiden mittigen (fiktiven) Förderkreisebenen 15 schneiden den Kommissionierbereich 3 frontal, und die jeweiligen beiden seitlichen (fiktiven) Förderkreisebenen 15 schneiden den Kommissionierbereich 3 in einem durch die V-Form definierten Winkel schräg.

Bei den Ausführungsformen gemäß den Figuren 8 und 9 erfolgt die Quellbehälterzuführung/-abführung an die Quellbehälter-Umlauffördervorrichtungen 7 über eine Quellbehälter-Fördereinrichtung 37, die sich entlang den dem Kommissionierbereich 3 abgewandten stirnseitigen Enden der Zielbehälter-Umlauffördervorrichtungen 7 erstreckt.

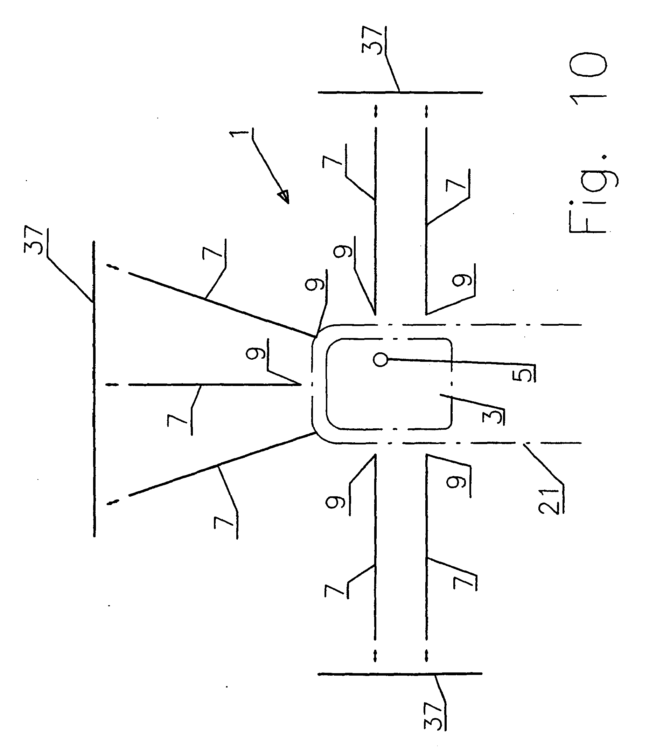

Bei der in Figur 10 in der Draufsicht schematisch dargestellten Variante einer Kommissioniereinrichtung 1 fördern die Quellbehälter-Umlauffördervorrichtungen 7 fächerförmig auf den zentral angeordneten Kommissionierbereich 3 zu bzw. davon ab, wobei die Zufuhr/Abfuhr von Quellbehältern über Quellbehälter-Fördereinrichtungen 37 erfolgt, die an den dem Kommissionierbereich 3 abgewandten Stirnenden der Quellbehälter-Umlauffördervorrichtungen 7 entlang laufen. Auch eine sternförmige Anordnung der Quellbehälter-Umlauffördervorrichtungen 7 bezüglich des zentral gelegenen Kommissionierbereichs 3 ist möglich. Die Zielbehälter-Transportbahn 21 erstreckt sich in dieser Ausführungsform entlang und vor den dem Kommissionierbereich 3 zugewandten Stirnenden 9 der Quellbehälter-Fördervorrichtungen 7 in einer U-Form.

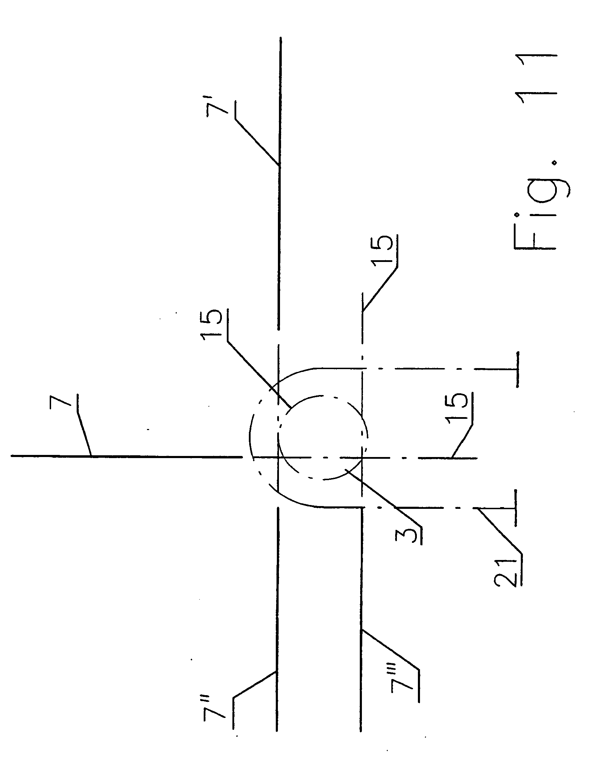

Eine weitere Variante ist in Figur 11 schematisch in der Draufsicht dargestellt, wonach ein erster und ein zweiter Quellbehälter-Umlaufförderkreis 7, 7' mit ihren Förderkreisebenen 15 senkrecht zueinander verlaufen und ein dritter Quellbehälter-Umlaufförderkreis 7" und ein vierter Quellbehälter-Umlaufförderkreis 7''' zueinander parallel sowie senkrecht zum ersten 7 und parallel gegenüberliegend zum zweiten Zielbehälterförderkreis 7' verlaufen. Der Kommissionierbereich 3 befindet sich dann erfindungsgemäß mittig an der Kreuzungsstelle der Förderkreisebenen 17 der Umlaufförderkreise 7, 7', 7'', 7'''. Die Zielbehälter-Transportbahn 21 erstreckt sich, wie auch schon in den obigen Ausführungsformen, entsprechend zwischen dem Kommissionierbereich 3 und den diesem zugewandten Stirnenden der Quellbehälter-Umlauffördervorrichtungen 7.

## Patentansprüche

1. Kommissioniereinrichtung (1) mit
- einem Kommissionierbereich (3) zum Kommissionieren von Artikeln aus Quellbehältern (11) in Zielbehälter (17) durch eine sich im Kommissionierbereich (3) befindende Kommissionierperson (5),
- mehreren benachbart zum Kommissionierbereich (3) angeordneten Quellbehälter-Umlauffördervorrichtungen (7), von welchen jede jeweils derart eingerichtet ist, dass von ihr mehrere Quellbehälter (11) entlang eines Quellbehälter-Förderkreises (13) in einer Förderkreisebene (15) umlaufend wiederholt der sich im Kommissionierbereich (3) befindenden Kommissionierperson (5) zugeführt werden, bis aus dem jeweiligen Quellbehälter (11) eine vorbestimmte Anzahl von Artikeln in jeweilige der Zielbehälter (17) kommissioniert sind, wobei die Förderkreisebene (15) des Quellbehälter-Förderkreises (13) der jeweiligen Quellbehälter-Umlauffördervorrichtung (7) vertikal verläuft sowie den Kommissionierbereich (3) schneidet,
- einer Quellbehälter-Fördereinrichtung (37) zum automatischen Fördern von Quellbehältern (11) von einem Artikellager an die Quellbehälter-Umlauffördervorrichtungen (7) und zum automatischen Zurückfördern von Quellbehältern (11) von den Quellbehälter-Umlauffördervorrichtungen (7) zum Artikellager und
- einer Zielbehälter-Fördertechnik zum Zuführen und Abführen von Zielbehältern (17) zum und vom Kommissionierbereich (3), wobei die Zielbehälter-Fördertechnik eine Zielbehälter-Transportbahn (21) aufweist, welche entlang dem Kommissionierbereichs (3) benachbart zu sowie stirnseitig vor den Quellbehälter-Förderkreisen (13) verläuft.

2. Kommissioniereinrichtung (1) nach Anspruch 1, wobei die Zielbehälter-Transportbahn (21) der Zielbehälter-Fördertechnik bezüglich der Quellbehälter-Förderkreise (13) auf einem derartigen Höhenniveau verläuft, dass die Zielbehälter (17) in etwa auf gleicher Höhe wie Quellbehälter (11), bevorzugt auf einem Höhenniveau unterhalb jenem der Quellbehälter (11), am Kommissionierbereich (3) für den Zugriff durch die Kommissionierperson (5) bereitgestellt sind.

3. Kommissioniereinrichtung (1) nach Anspruch 1 oder 2, wobei die Zuführ-Transportbahn (21) im Bereich des Kommissionierbereichs (3) quer zu ihrer Förderrichtung in Richtung zu dem Kommissionierbereich (3) hin um einen flachen Winkel, bevorzugt zwischen 5-35°, nach unten gekippt angeordnet ist.

4. Kommissioniereinrichtung (1) nach einem der Ansprüche 1 bis 3, wobei die Quellbehälter-Umlauffördervorrichtungen (7) mit parallel zueinander verlaufenden Förderkreisebenen (15) in Reihe nebeneinander angeordnet sind, wobei die Quellbehälter-Umlauffördervorrichtungen (7) an ihrer dem Kommissionierbereich (3) zugewandten Stirnseite miteinander bündig angeordnet sind oder horizontal entlang ihrer Förderkreisebenen (15) derart zueinander versetzt angeordnet sind, dass sie in der Draufsicht eine dem Kommissionierbereich (3) zugewandte, umgedrehte V-Form beschreiben, oder mit ihren Förderkreisebenen (15) in einem Winkel, wie z.B. einem 90° Winkel, zueinander verlaufend angeordnet sind.

5. Kommissioniereinrichtung (1) nach einem der Ansprüche 1 bis 4, wobei die Quellbehälter-Umlauffördervorrichtungen (7) als zueinander identische Module ausgeführt sind, so dass sie beliebig aneinander anreihenbar und/oder gegeneinander austauschbar ist.

6. Kommissioniereinrichtung (1) nach einem der Ansprüche 1 bis 5, wobei die Quellbehälter-Umlauffördervorrichtungen (7), bevorzugt in Laufrichtung der Zu- und Abführtrumms der Ziel-/Quellbehälter-Förderkreise (16), lineargeführt aneinander anbringbar und voneinander lösbar sind.

7. Kommissioniereinrichtung (1) nach einem der vorhergehenden Ansprüche, wobei in der jeweiligen Quellbehälter-Umlauffördervorrichtung (7) eine Vielzahl von Quellbehältern (11), bevorzugt wenigstens vier, besonders bevorzugt wenigstens sechs, kreisförderbar sind.

8. Kommissioniereinrichtung (1) nach einem der vorhergehenden Ansprüche, wobei der Umlaufbetrieb der jeweiligen Quellbehälter-Umlauffördervorrichtung (7) in seiner Richtung umkehrbar ist, sodass die im zugehörenden Quellbehälter-Förderkreis (13) sich befindenden Quellbehälter (11) wahlweise in die eine und in die andere Umlaufrichtung gefördert werden.

9. Verfahren zum Kommissionieren von Artikeln aus Quellbehältern (11) in Zielbehälter (17) durch eine sich in einem Kommissionierbereich (3) befindende Kommissionierperson (5), bevorzugt unter Verwendung einer Kommissioniereinrichtung (1) nach einem der vorhergehenden Ansprüche, wobei mittels mehreren benachbart zum Kommissionierbereich (3) angeordneten Quellbehälter-Umlauffördervorrichtungen (7) mit jeweils einem Quellbehälter-Förderkreis (13), wobei die Förderkreisebene (15) des Quellbehälter-Förderkreises (13) der jeweiligen Quellbehälter-Umlauffördervorrichtung (7) vertikal verläuft sowie den Kommissionierbereich (3) schneidet, pro Quellbehälter-Förderkreis (13) mehrere, bevorzugt eine Vielzahl wie Beispielsweise wenigstens vier oder fünf oder besonders bevorzugt wenigstens sechs, Quellbehälter (11) entlang des jeweiligen Quellbehälter-Förderkreises (13) der sich im Kommissionierbereich (3) befindenden
Kommissionierperson (5) umlaufend wiederholt solange zugeführt werden, bis aus dem jeweiligen Quellbehälter (11) eine gewünschte Anzahl an Artikeln in jeweilige der Zielbehälter (17) kommissioniert sind, wobei der Kommissionierperson (5) die Zielbehälter (17) auf einer Zielbehälter-Transportbahn (11) automatisch zugeführt und automatisch abgeführt werden, die benachbart zu sowie vor jener Stirnseite der Quellbehälter-Förderkreise (13) verläuft, die dem Kommissionierbereich (3) zugewandt ist.

10. Verfahren nach Anspruch 9, wobei die Quellbehälter (11) im jeweiligen Quellbehälter-Förderkreis (13) in Abhängigkeit von ihrer Entfernung zum Kommissionierbereich (3) in die eine oder in die andere Umlaufrichtung zum Kommissionierbereich (3) gefördert werden.

## Claims

1. Picking device (1), comprising:
- a picking area (3) for picking articles from source containers (11) into target containers (17) by a picking person (5) located in the picking area (3),
- several source container revolving conveying devices (7) arranged adjacent to the picking area (3), each of which being configured in such a manner that several source containers (11) are supplied thereby to the picking person (5) located in the picking area (3) in a revolving and repeated manner along a source container conveying circuit (13) in a conveying circuit plane (15) until a predetermined number of articles has been loaded from the respective source container (11) into respective ones of the target containers (17), wherein the conveying circuit plane (15) of the source container conveying circuit (13) of the respective source container revolving conveying device (7) extends vertically and crosses the picking area (3),
- a source container conveying installation (37) for automatically supplying source containers (11) from an article storage to the source container revolving conveying devices (7) and for automatically re-supplying source containers (11) from the source container revolving conveying devices (7) to the article storage, and
- a target container conveyance for supplying and discharging target containers (17) to and from the picking area (3), wherein the target container conveyance comprises a target container conveying track (21) which extends along the picking area (3) adjacent to and frontally ahead of the source container conveying circuits (13).

2. Picking device (1) according to claim 1, wherein the target container conveying track (21) of the target container conveyance extends with respect to the source container conveying circuits (13) on such a height level that the target containers (17) are provided for access by the picking person (5) at the picking area (3) at approximately the same height as the source containers (11), preferably on a height level underneath that of the source containers (11).

3. Picking device (1) according to claim 1 or 2, wherein the supply conveying track (21) is arranged to be tilted downwards in the area of the picking area (3) transverse to its conveying direction in a direction towards the picking area (3) by a flat angle, preferably between 5 to 35°.

4. Picking device (1) according to any of claims 1 to 3, wherein the source container revolving conveying devices (7) are arranged in a row side by side with conveying circuit planes (15) extending in parallel to each other, wherein the source container revolving conveying devices (7) are arranged on their front side facing the picking area (3) to be flush with each other or are arranged to be offset with respect to each other horizontally along their conveying circuit planes (15) in such a manner that they describe in a plan view a reversed V-shape facing the picking area (3), or are arranged with their conveying circuit planes (15) extending toward each other at an angle, for example an angle of 90°.

5. Picking device (1) according to any of claims 1 to 4, wherein the source container revolving conveying devices (7) are provided as modules identical to each other, so that they can be connected in a row relative to each other and/or be replaced with each other in an arbitrary manner.

6. Picking device (1) according to any of claims 1 to 5, wherein the source container revolving conveying devices (7) can be attached to each other and released from each other in a linearly guided manner, preferably in the moving direction of the supply and discharge portions of the target/source container conveying circuits (16).

7. Picking device (1) according to any of the preceding claims, wherein in the respective source container revolving conveying device (7) a plurality of source containers (11), preferably at least four, in a particularly preferred manner at least six, are circularly conveyable.

8. Picking device (1) according to any of the preceding claims, wherein the revolving operation of the respective source container revolving conveying device (7) is reversible in its direction, so that the source containers (11) located in the corresponding source container conveying circuit (13) are conveyed selectively in the one or in the other revolving direction.

9. Method for picking articles from source containers (11) into target containers (17) by a picking person (5) located in a picking area (3), preferably by using a picking device (1) according to any of the preceding claims, wherein by means of several source container revolving conveying devices (7) which are arranged adjacent to the picking area (3) with respectively one source container conveying circuit (13), the conveying circuit plane (15) of the source container conveying circuit (13) of the respective source container revolving conveying device (7) extending vertically and crossing the picking area (3), several, preferably a multiplicity of, for example at least four or five or in a particularly preferred manner at least six source containers (11) per source container conveying circuit (13) are supplied to the picking person (5) located in the picking area (3) in a revolving and repeated manner along the respective source container conveying circuit (13) until a desired number of articles has been loaded from the respective source container (11) into respective ones of the target containers (17), wherein the target containers (17) are automatically supplied to the picking person (5) and automatically discharged on a target container conveying track (11) extending adjacent to and ahead of each front side of the source container conveying circuits (13), which faces the picking area (3).

10. Method according to claim 9, wherein the source containers (11) are conveyed in the respective source container conveying circuit (13) depending on their distance to the picking area (3) in the one or in the other revolving direction to the picking area (3).

## Revendications

1. Dispositif de préparation des commandes (1) comportant
- une zone de préparation des commandes (3) pour qu'une personne de service (5), située dans la zone de préparation des commandes (3), dépose dans des réceptacles cible (17) des marchandises prélevées dans des réceptacles source (11),
- plusieurs convoyeurs sans fin pour réceptacles source (7), qui sont disposés au voisinage de la zone de préparation des commandes (3) et dont chacun est équipé de telle sorte qu'ils acheminent de manière répétée en continu vers la personne de service (5) plusieurs réceptacles source (11) le long d'un circuit de transport (13) dans un plan de transport (15) jusqu'à ce que le nombre prédéterminé de marchandises ait été prélevé hors de chaque réceptacle source (11) et déposé dans chacun des réceptacles cible (17), le plan de transport (15) du circuit de transport (13) de chacun des convoyeurs sans fin pour réceptacles source (7) étant orienté verticalement et coupant la zone de préparation des commandes (3),
- un dispositif de transport des réceptacles source (37) pour le transport automatique des réceptacles source (11) depuis un entrepôt de marchandises vers les convoyeurs sans fin pour réceptacles source (7) et pour le renvoi automatique des réceptacles source (11) depuis les convoyeurs sans fin pour réceptacles source (7) vers l'entrepôt de marchandises, et
- un équipement de transport des réceptacles cible pour acheminer les réceptacles cible (17) vers la zone de préparation des commandes (3) et les évacuer hors de celle-ci, ledit équipement de transport des réceptacles cible comportant une bande transporteuse (21) qui s'étend le long de la zone de préparation des commandes (3), à proximité et en amont de la face frontale des circuits de transport des réceptacles source (13).

2. Dispositif de préparation des commandes (1) selon la revendication 1, **caractérisé en ce que** la bande transporteuse (21) de l'équipement de transport des réceptacles cible s'étend par rapport aux circuits de transport des réceptacles source (13) à un niveau de hauteur tel que les réceptacles cible (17) sont mis à disposition à peu près à la même hauteur que les réceptacles source (11), de préférence à un niveau de hauteur au-dessous de celui des réceptacles source (11) dans la zone de préparation des commandes (3) pour permettre à la personne de service (5) d'y accéder.

3. Dispositif de préparation des commandes (1) selon la revendication 1 ou 2, **caractérisé en ce que** la bande transporteuse (21) dans la région de la zone de préparation des commandes (3) est disposée en étant basculée vers le bas selon un angle plat, de préférence entre 5 et 35°, transversalement à sa direction de transport, vers la zone de préparation des commandes (3).

4. Dispositif de préparation des commandes (1) selon l'une quelconque des revendications 1 à 3, **caractérisé en ce que** les convoyeurs sans fin pour réceptacles source (7) sont disposés les uns à côté des autres avec des plans de transport (15) parallèles entre eux, lesdits convoyeurs sans fin pour réceptacles source (7) étant disposés à fleur entre eux au niveau de leur face frontale orientée vers la zone de préparation des commandes (3) ou étant décalés les uns par rapport aux autres horizontalement le long de leurs plans de transport (15), de telle sorte que, sur une vue en élévation, ils définissent une forme en V inversé, orienté vers la zone de préparation des commandes (3), ou étant disposés les uns par rapport aux autres en formant avec leurs plans de transport (15) un angle, tel qu'un angle de 90°.

5. Dispositif de préparation des commandes (1) selon l'une quelconque des revendications 1 à 4, **caractérisé en ce que** les convoyeurs sans fin pour réceptacles source (7) sont réalisés sous forme de modules identiques entre eux, de telle sorte qu'ils peuvent être joints les uns aux autres de manière quelconque et/ou peuvent être permutés entre eux.

6. Dispositif de préparation des commandes (1) selon l'une quelconque des revendications 1 à 5, **caractérisé en ce que** les convoyeurs sans fin pour réceptacles source (7) peuvent être attachés les uns aux autres de manière linéaire, de préférence dans le sens de défilement du brin d'acheminement et d'évacuation des circuits de transport (16) pour les réceptacles source et les réceptacles cible, et peuvent être désolidarisés les uns des autres.

7. Dispositif de préparation des commandes (1) selon l'une quelconque des revendications précédentes, **caractérisé en ce que** dans chacun des convoyeurs sans fin pour réceptacles source (7), une pluralité de réceptacles source (11), de préférence au moins quatre, de manière particulièrement préférée au moins six, peuvent être transportés en boucle.

8. Dispositif de préparation des commandes (1) selon l'une quelconque des revendications précédentes, **caractérisé en ce que** le fonctionnement en boucle du convoyeur sans fin pour réceptacles source (7) respectif peut être inversé en sens, de telle sorte que les réceptacles source (11), situés dans le circuit de transport (13), qui est associé audit convoyeur, peuvent être transportés au choix dans l'une ou dans l'autre direction circonférentielle.

9. Procédé pour la préparation des commandes de marchandises par une personne de service (5), située dans la zone de préparation des commandes (3) pour déposer dans des réceptacles cible (17) des marchandises prélevées dans des réceptacles source (11), de préférence moyennant l'utilisation d'un dispositif de préparation des commandes (1) selon l'une quelconque des revendications précédentes, selon lequel, au moyen de plusieurs convoyeurs sans fin pour réceptacles source (7), agencés au voisinage de la zone de préparation des commandes (3) et comportant chacun un circuit de transport (13) pour réceptacles source, le plan de transport (15) du circuit de transport (13) du convoyeur sans fin pour réceptacles source (7) respectif étant orienté verticalement et coupant la zone de préparation des commandes (3), plusieurs réceptacles source (11), tels qu'au moins quatre ou cinq, ou encore mieux au moins six, sont acheminés de manière répétée en continu le long du circuit de transport (13) respectif vers la personne de service (5), située dans la zone de préparation des commandes (3), jusqu'à ce que le nombre prédéterminé de marchandises ait été prélevé hors du réceptacle source (11) respectif et déposé dans le réceptacle cible (17) respectif, les réceptacles cible (17) étant acheminés automatiquement vers la personne de service (5) et évacués automatiquement sur une bande transporteuse (11) qui s'étend à proximité et en amont de la face frontale des circuits de transport des réceptacles source (13), laquelle est orientée vers la zone de préparation des commandes (3).

10. Procédé selon la revendication 9, **caractérisé en ce que** les réceptacles source (11) dans le circuit de transport pour réceptacles source (13) respectif sont transportés, en fonction de leur distance par rapport à la zone de préparation des commandes (3), dans l'une ou dans l'autre direction circonférentielle vers la zone de préparation des commandes (3).
